# EUROPEAN PATENT SPECIFICATION

(11) **EP 3 002 933 B1**
(45) Date of publication and mention of the grant of the patent: **06.11.2019**
(21) Application number: 14895488.6
(22) Date of filing: 24.06.2014
(51) Int. Cl.: H04M 1/02, H04M 1/22, H04M 1/725, G08B 5/36

(54) **USER TERMINAL LIGHT CONTROL METHOD AND CORRESPONDING APPARATUS**
LICHTSTEUERUNGSVERFAHREN UND ENTSPRECHENDER APPARAT FÜR BENUTZERTERMINAL
PROCÉDÉ ET APPAREIL DE COMMANDE DE LUMIÈRE POUR UN TERMINAL UTILISATEUR

(43) Date of publication of application: 06.04.2016
(73) Proprietor: Huawei Technologies Co. Ltd., Shenzhen, Guangdong 518129 (CN)
(72) Inventor: KIM, Joon Suh, Shenzhen Guangdong 518129 (CN); LI, Jinpu, Shenzhen Guangdong 518129 (CN); WANG, Yahui, Shenzhen Guangdong 518129 (CN)
(74) Representative: Gill Jennings & Every LLP
(86) International application number: PCT/CN2014/080640
(87) International publication number: WO 2015/196371

(56) References cited:
- EP-A1- 2 418 830
- EP-A1- 2 654 272
- CN-A- 103 022 832
- CN-A- 103 379 198
- CN-Y- 201 160 105
- CN-Y- 201 167 120
- KR-A- 20070 016 202
- US-B1- 6 639 382

## Description

### TECHNICAL FIELD

Embodiments of the present invention relate to light control technologies, and in particular, to a light control method and apparatus for a user equipment, and a user terminal.

### BACKGROUND

When a mobile device such as a mobile phone is charged, a charger plug needs to be connected to a charging interface of the mobile phone, so as to implement a charging process.

At present, there is a Universal Serial Bus (Universal Serial Bus, USB for short) plug that can implement lighting when the plug is plugged or unplugged. An enclosure of the plug is of light transmission, a light source is disposed inside the enclosure, and the light source, which plays a decoration and lighting role, in the plug is enabled when the plug is connected to a terminal.

However, this plug cannot automatically emit light when the plug is not connected to a terminal, and if a field environment is relatively dim, it is not easy to successfully connect a charger plug and a charging interface of a mobile device because of insufficient light, and the charger may even be damaged when the plug is plugged by force.

EP 2654272 relates to method and apparatus for using portable terminal. KR20070016202 relates to a mobile communication terminal equipped with a light emitting means. EP 2418830 relates to near-field communication (NFC) system providing plug-in device connection assistance features and related methods.

### SUMMARY

The present invention provides a light control method and apparatus for a user equipment, and a user terminal, which can control, according to a battery level of a mobile phone and an environmental parameter on a side of a charging interface of a user equipment, a lighting device to be enabled.

Various aspects of the present disclosure have been defined in the independent claims. Further technical features of each of these aspects have been defined in the respective dependent claims.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic flowchart of a light control method for a user equipment according to Embodiment 1 of the present invention;
FIG. 2 is a schematic diagram in which a sensor and a lighting device are disposed near a charging interface of a user equipment according to Embodiment 1;
FIG. 3 is a schematic flowchart of a light control method for a user equipment according to Embodiment 2 of the present invention;
FIG. 4 is a schematic flowchart of a light control method for a user equipment according to Embodiment 3 of the present invention;
FIG. 5 is a schematic structural diagram of a light control device for a user equipment according to Embodiment 4 of the present invention; and
FIG. 6 is a schematic structural diagram of a user terminal according to Embodiment 5 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention as claimed. All other embodiments obtained by persons of ordinary skill in the art based on the embodiments of the present invention without creative efforts shall fall within the protection scope of the present invention as claimed.

The terms used in the embodiments of the present invention are merely for the purpose of describing specific embodiments, but are not intended to limit the present invention. The terms "a", "said" and "the" of singular forms used in the embodiments and the appended claims of the present invention are also intended to include plural forms, unless otherwise specified in the context clearly. It should also be understood that, the term "and/or" used in this specification indicates and includes any or all possible combinations of one or more associated listed items.

It should be understood that, although terms such as "first", "second", and "third" may be used in the embodiments of the present invention to describe various thresholds, these thresholds should not be limited by these terms. These terms are merely used to distinguish the various thresholds from each other. For example, without departing from the scope of the embodiments of the present invention, a first threshold may also be referred to as a second threshold, and similarly, a second threshold may also be referred to as a first threshold.

Depending on the context, as used herein, the word "if' may be construed as "at the time of ..." or "when ..." or "in response to determining" or "in response to detecting".

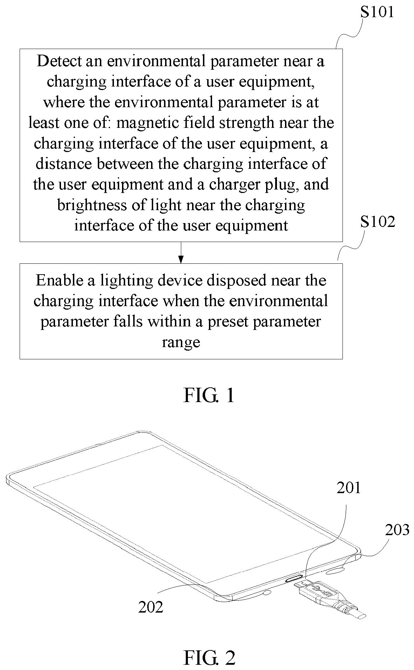

FIG. 1 is a schematic flowchart of a light control method for a user equipment according to Embodiment 1 of the present invention. As shown in FIG. 1, the light control method for a user equipment provided in this embodiment includes:

S101: Detect an environmental parameter near a charging interface of a user equipment, where the environmental parameter is at least one of: magnetic field strength near the charging interface of the user equipment, a distance between the charging interface of the user equipment and a charger plug, and brightness of light near the charging interface of the user equipment.

The user equipment, including a mobile phone, a tablet computer (Tablet Computer), a personal digital assistant (Personal Digital Assistant, PDA for short), and another portable mobile user terminal, needs to be connected to a charger for charging when a battery level of the user equipment is low. In this case, it may be determined, by detecting the battery level of the user equipment, whether to perform a charging operation on the user equipment. Therefore, optionally, before the environmental parameter near the charging interface of the user equipment is detected, the method may further include: determining, according to the battery level of the user equipment, whether to detect the environmental parameter near the charging interface of the user equipment. If it is detected that the battery level of the user equipment is low and a charging operation needs to be performed, for example, if the battery level of the user equipment is less than a preset first threshold, the environmental parameter near the charging interface of the user equipment is detected. The first threshold may be preset to a percentage of a full battery level of the user equipment, such as 30% or 50% of the full battery level, or may be set by a user randomly. The charging interface of the user equipment may include a Universal Serial Bus (Universal Serial Bus, USB for short) interface, a Mini-USB (Mini-USB) interface, a Micro-USB interface, a pin-type charging interface, another power interface, or the like.

Specifically, the environmental parameter is at least one of: the magnetic field strength near the charging interface of the user equipment, the distance between the charging interface of the user equipment and the charger plug, and the brightness of light near the charging interface of the user equipment. When the user equipment detects the foregoing environmental parameters, different sensors disposed in the user equipment may be used, for example, a Hall sensor is used to detect the magnetic field strength near the charging interface of the user equipment, a proximity sensor is used to detect the distance between the charging interface of the user equipment and the charger plug, and a light sensor is used to detect the brightness of light near the charging interface of the user equipment.

S102: Enable a lighting device disposed near the charging interface when the environmental parameter falls within a preset parameter range.

FIG. 2 is a schematic diagram in which a sensor and a lighting device are disposed near a charging interface of a user equipment according to Embodiment 1. As shown in FIG. 2, a sensor 202 configured to detect an environmental parameter is disposed near a charging interface 201 of a user equipment, and a lighting device 203 is disposed on the other side of the charging interface. In this way, the sensor may detect an environmental parameter near the charging interface, and the lighting device may provide light in a direction of the side of the charging interface. Specifically, when the environmental parameter detected by the sensor in the user equipment falls within a preset parameter range, the lighting device disposed near the charging interface of the user equipment may be enabled, so that the lighting device is in a light-emitting state to provide auxiliary lighting, thereby ensuring sufficient ambient brightness so as to enable a user to successfully connect the user equipment and a charger plug.

The foregoing parameter range may be set to a range of one environmental parameter, or may be a range of a parameter combination of multiple environmental parameters. When the parameter range is a range of one environmental parameter, such as magnetic field strength detected by a Hall sensor, and when the magnetic field strength falls within the range, the lighting device disposed near the charging interface of the user equipment is enabled. When the environmental parameter is a distance detected by a proximity sensor, the parameter range may be set to 0 to 10 cm; and if the distance detected by the proximity sensor is 5 cm, it may be learned that the parameter falls within the preset parameter range, and in this case, the lighting device disposed near the charging interface of the user equipment may be enabled. When the parameter range is a range of a combination of multiple environmental parameters, a comprehensive evaluation may be performed according to a preset policy and multiple detected environmental parameters such as the magnetic field strength near the charging interface of the user equipment and brightness of light near the charging interface of the user equipment, so as to determine a size of a combination value. When the combination value exceeds the parameter range, it indicates that the charging interface of the user equipment is relatively close to the charger plug, and in this case, the lighting device disposed near the charging interface of the user equipment is controlled to be enabled.

Specifically, when the environmental parameter is magnetic field strength near the charging interface of the user equipment, detecting the environmental parameter near the charging interface of the user equipment specifically includes: enabling a Hall sensor disposed near the charging interface of the user equipment, to detect the magnetic field strength near the charging interface of the user equipment.

Correspondingly, enabling the lighting device disposed near the charging interface when the environmental parameter falls within the preset parameter range specifically includes:
when the magnetic field strength near the charging interface of the user equipment falls within the preset parameter range and the Hall sensor outputs a preset enabling level value, enabling the lighting device disposed near the charging interface. For example, when the magnetic field strength near the charging interface of the user equipment exceeds a preset value, a level output by the Hall sensor is changed from a low level into a high level, where the high level is the preset enabling level value; and after the high level output by the Hall sensor is sent to a processor of the user equipment, the processor controls, according to a prestored instruction, the lighting device disposed near the charging interface to be enabled, so that the lighting device is in a light-emitting state.

Specifically, when the environmental parameter is a distance between the charging interface of the user equipment and the charger plug, detecting the environmental parameter near the charging interface of the user equipment specifically includes: enabling a proximity sensor disposed near the charging interface of the user equipment, to detect the distance between the charging interface and the charger plug.

Correspondingly, enabling the lighting device disposed near the charging interface when the environmental parameter falls within the preset parameter range specifically includes:
when the distance between the charging interface and the charger plug falls within the preset parameter range and the proximity sensor outputs a preset enabling level value, enabling the lighting device disposed near the charging interface. For example, when the distance between the charging interface and the charger plug exceeds a preset value, a level output by the proximity sensor is changed from a low level into a high level, where the high level is the preset enabling level value; and after the high level output by the proximity sensor is sent to a processor of the user equipment, the processor controls, according to a prestored instruction, the lighting device disposed near the charging interface to be enabled, so that the lighting device is in a light-emitting state.

Specifically, when the environmental parameter is brightness of light near the charging interface of the user equipment, detecting the environmental parameter near the charging interface of the user equipment specifically includes: enabling a light sensor disposed near the charging interface of the user equipment, to detect the brightness of light near the charging interface.

Correspondingly, enabling the lighting device disposed near the charging interface when the environmental parameter falls within the preset parameter range specifically includes:
when the brightness of light near the charging interface falls within the preset parameter range and the light sensor outputs a preset enabling level value, enabling the lighting device disposed near the charging interface. For example, when the brightness of light near the charging interface exceeds a preset value, a level output by the light sensor is changed from a low level into a high level, where the high level is the preset enabling level value; and after the high level output by the light sensor is sent to a processor of the user equipment, the processor controls, according to a prestored instruction, the lighting device disposed near the charging interface to be enabled, so that the lighting device is in a light-emitting state.

Specifically, when the environmental parameter is a combination value of at least two of: magnetic field strength near the charging interface of the user equipment, a distance between the charging interface of the user equipment and the charger plug, and brightness of light near the charging interface of the user equipment, detecting the environmental parameter near the charging interface of the user equipment specifically includes: enabling at least two of: a Hall sensor, a proximity sensor, and a light sensor that are disposed near the charging interface of the user equipment, to detect at least two of: the magnetic field strength near the charging interface of the user equipment, the distance between the charging interface and the charger plug, and the brightness of light near the charging interface.

Correspondingly, enabling the lighting device disposed near the charging interface when the environmental parameter falls within the preset parameter range specifically includes:
when at least two of: the magnetic field strength near the charging interface of the user equipment, the distance between the charging interface and the charger plug, and the brightness of light near the charging interface fall within the preset parameter range, enabling, according to preset enabling level values output by the Hall sensor, the proximity sensor, and the light sensor, the lighting device disposed near the charging interface.

Specifically, after the lighting device disposed near the charging interface is enabled, at least one of: a display color, brightness, and a blinking frequency of the lighting device may further be controlled according to a battery level of the user equipment and/or user service information. Specifically, different colors, different brightness, and different blinking frequencies may be displayed by the lighting device in the user equipment according to the battery level of the user equipment and/or the user service information. The user service information includes service information received by the user equipment, such as caller identification display, a short message, and network prompt information.

Specifically, after the lighting device disposed near the charging interface is enabled, the lighting device may be controlled, according to at least one of: a charging state of the user equipment, the battery level of the user equipment, and the environmental parameter near the charging interface of the user equipment, to be disabled, which may specifically include:
if duration in which the user equipment is in an uncharged state exceeds a preset second threshold, disabling the lighting device; or
if the battery level of the user equipment reaches a preset third threshold, disabling the lighting device; or
if the user equipment is in an uncharged state and the environmental parameter falls within the preset parameter range, disabling the lighting device.

In this embodiment, first an environmental parameter near a charging interface of a user equipment is detected; and then a lighting device disposed near the charging interface is enabled when the detected environmental parameter falls within a preset parameter range. In this way, it is implemented that when a mobile phone is connecting to a charger plug, a lighting and prompting function is provided for a user according to a battery level of the mobile phone and an environmental parameter near a charging interface of a user equipment.

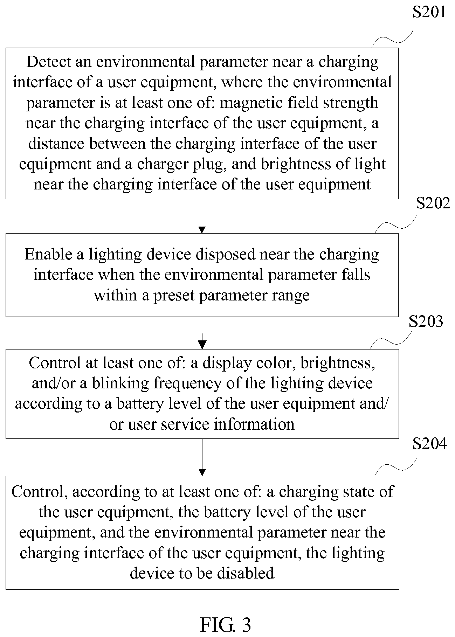

FIG. 3 is a schematic flowchart of a light control method for a user equipment according to Embodiment 2 of the present invention. This embodiment provides an entire process of turning on and off of light for a user equipment. As shown in FIG. 3, the light control method for a user equipment provided in this embodiment includes:
S201: Detect an environmental parameter near a charging interface of a user equipment, where the environmental parameter is at least one of: magnetic field strength near the charging interface of the user equipment, a distance between the charging interface of the user equipment and a charger plug, and brightness of light near the charging interface of the user equipment.

Specifically, before detecting of the environmental parameter near the charging interface of the user equipment is enabled, the method further includes: determining, according to a battery level of the user equipment, whether to detect the environmental parameter near the charging interface of the user equipment; and
if the battery level of the user equipment is less than a preset first threshold, enabling detecting of the environmental parameter near the charging interface of the user equipment.

A mobile phone is used as an example, and the mobile phone needs to be connected to a charger for charging when a battery level of the mobile phone is low. In this case, it may be determined, by detecting the battery level of the mobile phone, whether to perform a charging operation on the mobile phone. A mobile phone that uses an Android (Android) system is used as an example, and in the Android system, a Broadcast Receiver (Broadcast Receiver) mechanism may be used to acquire ACTION_BATTERY_CHANGED intent (ACTION_BATTERY_CHANGED intent), so as to acquire a current battery state of the mobile phone; or directly receive ACTION_BATTERY_LOW (ACTION_BATTERY_LOW). If it is detected that the battery level of the mobile phone is less than a preset first threshold, for example, when the battery level of the mobile phone is 30% of a full battery level of the mobile phone, it is determined that a charging operation needs to be performed on the mobile phone. In this case, a sensor disposed in the mobile phone is enabled to detect an environmental parameter near a charging interface of the mobile phone. In this embodiment, a Hall sensor is used to detect the environmental parameter near the interface of the mobile phone, where the Hall sensor is a magnetic field sensor made according to the Hall effect. A voltage of the Hall sensor varies with magnetic field strength, and when a stronger magnified field indicates a higher voltage; and when a weaker magnified field indicates a lower voltage. The Hall sensor is disposed near the charging interface of the mobile phone. Correspondingly, a small magnet is installed in the charger plug. When the charger plug is approaching to the charging interface of the mobile phone, a magnetic field detected by the Hall sensor becomes stronger as the charger plug is approaching to the charging interface of the mobile phone, and the magnetic field becomes weaker as the charger plug is getting far away from the charging interface of the mobile phone.

S202: Enable a lighting device disposed near the charging interface when the environmental parameter falls within a preset parameter range.

When the charger plug approaches to the charging interface of the mobile phone at a distance, the magnetic field detected by the Hall sensor falls within the previously preset parameter range; and in this case, a voltage output by the Hall sensor rises as the magnified field becomes stronger, and a preset enabling level value is output. For example, the voltage output by the Hall sensor may be changed from a low level state to a high level state, a high level is output to a control module of the mobile phone, and the control module enables, according to the high level, a lighting device disposed near the charging interface. After being enabled, the lighting device may provide light within a small range area around the charging interface of the mobile phone, so that a user can clearly see a position of the charger plug relative to the charging interface of the mobile phone, so as to complete a connection between the charger plug and the mobile phone.

It should be noted that in the foregoing two steps, the environmental parameter may also be the distance between the charging interface of the user equipment and the charger plug or the brightness of light near the charging interface of the user equipment, and in this case, one of the foregoing two environmental parameters may be detected, and according to the environmental parameter, the lighting device is controlled to be enabled.

When the distance between the charging interface of the user equipment and the charger plug is detected, a proximity sensor may be used to perform detection. The proximity sensor (Proximity sensor) is also referred to as an optical proximity sensor, an infrared sensor, or the like; and detects a physical variation of an object mainly by using various elements, measures distance displacement from the sensor to the object by converting the variation into a distance, and is classified into an optical displacement sensor, a linear proximity sensor, an ultrasonic displacement sensor, or the like according to a different used element. A proximity sensor used by the mobile phone uses a principle of measuring time to measure a distance, so as to detect a distance between objects. The proximity sensor is enabled, transmits an extremely short light pulse, and measures time for which the light pulse is transmitted to an object and reflected by the object, so as to calculate a distance between the light pulse and the object by measuring the time. In this case, it may be determined whether the calculated distance falls within a preset distance parameter range, such as 10 cm, and if yes, it indicates that the charger plug is extremely close to the charging interface of the mobile phone; and in this case, the sensor outputs a corresponding preset enabling level value and controls the lighting device to be enabled.

When the brightness of light near the charging interface of the user equipment is detected, a light sensor may be used to detect current ambient light, and if current ambient brightness detected by the light sensor is less than a preset brightness threshold, a different preset enabling level value may be output, such as a high level, and the lighting device is controlled to be enabled.

Particularly, when the user equipment is powered off because of a low battery level, a weak power-off current after the user equipment is powered off or a backup battery inside the user equipment may still be used to supply power, so as to detect the environmental parameter and enable the lighting device. In this case, a coprocessor or a sensor hub (Sensor Hub) may be used to collect sensor data and control the lighting device to be enabled. Because the coprocessor and the sensor hub require only a weak current to maintain running, the coprocessor and the sensor hub can still keep working after the user equipment is powered off.

S203: Control at least one of: a display color, brightness, and a blinking frequency of the lighting device according to a battery level of the user equipment and/or user service information.

After the connection between the charger plug and the mobile phone is completed, the mobile phone is in a charging state, and in this case, light of the lighting device may be changed from auxiliary light into prompt light, where the prompt light may has multiple colors and blinking frequencies. At least one of: the display color, the brightness, and the blinking frequency of the lighting device may be controlled according to the battery level of the user equipment and/or the user service information. For example, when the battery level of the mobile phone is below 50%, a light color displayed by the lighting device is red, and the light is in a rapid blinking state and blinks once every one second; when the battery level of the mobile phone falls within 50% to 70%, the light color of the lighting device is yellow, and the light blinks once every several seconds; and when the battery level of the mobile phone is above 95%, the light of the lighting device is steady green. In this way, a user may learn a battery level situation of the mobile phone according to information such as the light color, the brightness, and the blinking frequency that are displayed by the lighting device. When the mobile phone has user service information such as a short message or a missed call, the lighting device may also have different display colors, brightness, and blinking frequencies. For example, when the mobile phone has unread information, light displayed by the lighting device may be blue and blinks once every several seconds; and when the mobile phone has a missed call, orange light that blinks once every one second is displayed by the lighting device. In this way, the user may learn that the mobile phone has a missed call or an unread short massage; and distinguish the missed call from the unread short massage according to a display difference of the lighting device, so as to learn importance of service information. Display colors, brightness, and blinking frequencies that are corresponding to different battery level situations and user service information may be adjusted and set by the user as required.

Optionally, at least one of: the display color, the brightness, and the blinking frequency of the lighting device may also be controlled according to information received by the user equipment, such as caller identification display, an operator's short message, or network information. For example, after the user equipment such as a mobile phone receives a short message, blue blinking light may be displayed by the lighting device to prompt a user to view the short message.

S204: Control, according to at least one of: a charging state of the user equipment, the battery level of the user equipment, and the environmental parameter near the charging interface of the user equipment, the lighting device to be disabled.

Specifically, if duration in which the mobile phone is in an uncharged state exceeds a preset second threshold, it is possible that the user mistakenly places the mobile phone near the charger plug, and in this case, if the mobile phone is in the uncharged state and when duration of the state exceeds the preset second threshold such as 1 minute, the lighting device is controlled to be disabled, so as to save the battery level of the mobile phone.

If the battery level of the mobile phone reaches a preset third threshold, for example, the battery level of the mobile phone reaches 98% of a full battery level, in this case, it may be considered that a battery of the mobile phone has been fully charged, and the lighting device is disabled.

If the mobile phone is in an uncharged state and the environmental parameter falls within the preset parameter range, in this case, a corresponding scenario is that the mobile phone gets far away from a charger interface, and in this case, similarly, light does not need to be provided near the charging interface of the mobile phone, and therefore, the lighting device is disabled.

In this embodiment, first an environmental parameter near a charging interface of a user equipment is detected; then a lighting device disposed near the charging interface is enabled when the environmental parameter falls within a preset parameter range, and a display color, brightness, and a blinking frequency of the lighting device are controlled according to a battery level of the user equipment; and finally the lighting device is controlled, according to at least one of: a charging state of the user equipment, the battery level of the user equipment, and the environmental parameter near the charging interface of the user equipment, to be disabled. In this way, it is implemented that when a mobile phone is connecting to a charger plug, a lighting and prompting function is provided for a user according to a battery level of the mobile phone and an environmental parameter near a charging interface of a user equipment.

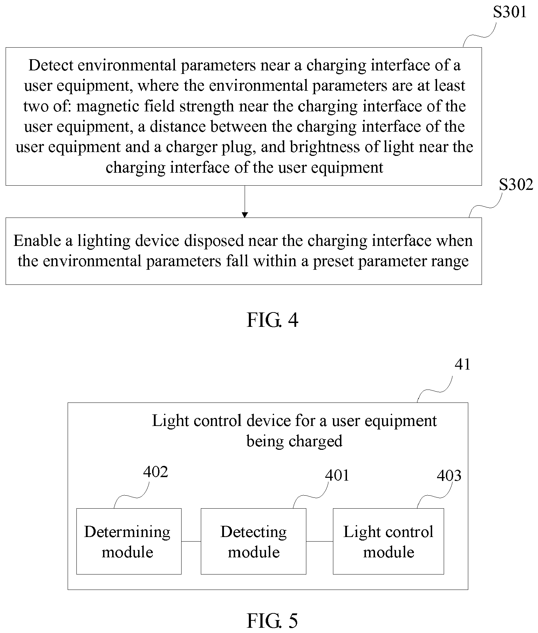

FIG. 4 is a schematic flowchart of a light control method for a user equipment according to Embodiment 3 of the present invention. This embodiment is corresponding to an implementation scenario in which multiple sensors are disposed in a user equipment, and a lighting device disposed near a charging interface is enabled according to multiple detected environmental parameters. As shown in FIG. 4, Embodiment 3 of the present invention includes:

S301: Detect environmental parameters near a charging interface of a user equipment, where the environmental parameters are at least two of: magnetic field strength near the charging interface of the user equipment, a distance between the charging interface of the user equipment and a charger plug, and brightness of light near the charging interface of the user equipment.

S302: Enable a lighting device disposed near the charging interface when the environmental parameters fall within a preset parameter range.

Specifically, when the environmental parameters are a combination value of at least two of: the magnetic field strength near the charging interface of the user equipment, the distance between the charging interface of the user equipment and the charger plug, and the brightness of light near the charging interface of the user equipment, detecting the environmental parameters near the charging interface of the user equipment specifically includes: enabling at least two of: a Hall sensor, a proximity sensor, and a light sensor that are disposed near the charging interface of the user equipment, to detect at least two of: the magnetic field strength near the charging interface of the user equipment, the distance between the charging interface and the charger plug, and the brightness of light near the charging interface.

Correspondingly, enabling the lighting device disposed near the charging interface when the environmental parameters fall within the preset parameter range specifically includes:
when at least two of: the magnetic field strength near the charging interface of the user equipment, the distance between the charging interface and the charger plug, and the brightness of light near the charging interface fall within the preset parameter range, enabling, according to preset enabling level values output by the Hall sensor, the proximity sensor, and the light sensor, the lighting device disposed near the charging interface.

The foregoing steps S301 and S302 are similar to those in the foregoing Embodiment 2 and are not described herein again. A difference lies in that in this embodiment, when the environmental parameters near the charging interface of the user equipment are detected, multiple environmental parameters near the charging interface of the user equipment are detected, where the multiple environmental parameters include at least two of: the magnetic field strength near the charging interface of the user equipment, the distance between the charging interface of the user equipment and the charger plug, and the brightness of light near the charging interface of the user equipment. In addition, the parameter range is a range of a combination of multiple environmental parameters, and in this case, a comprehensive evaluation may be performed according to a preset policy and multiple detected environmental parameters such as the magnetic field strength near the charging interface of the user equipment and the brightness of light near the charging interface of the user equipment, so as to determine an environmental parameter value. When at least two of: the magnetic field strength near the charging interface of the user equipment, the distance between the charging interface and the charger plug, and the brightness of light near the charging interface fall within the preset parameter range, it indicates that the charging interface of the user equipment is relatively close to the charger plug, and in this case, the lighting device disposed near the charging interface of the user equipment is controlled to be enabled. Alternatively, it may be determined according to a combination of the distance between the charging interface of the user equipment and the charger plug, and the brightness of light near the charging interface of the user equipment. For example, when a user directly uses a hand to cover the vicinity of the charging interface of the user equipment, both a distance sensed by the proximity sensor and brightness on the side of the charging interface fall within the preset parameter range, and in this case, light of the lighting device may be turned on.

In this embodiment, first multiple environmental parameters near a charging interface of a user equipment are detected; then a lighting device disposed near the charging interface is enabled when a combination value of the environmental parameters falls within a preset parameter range, and a display color, brightness, and a blinking frequency of the lighting device are controlled according to a battery level of the user equipment; and finally the lighting device is controlled, according to at least one of: a charging state of the user equipment, the battery level of the user equipment, and the environmental parameters near the charging interface of the user equipment, to be disabled. In this way, it is implemented that when a mobile phone is connecting to a charger plug, a lighting and prompting function is provided for a user according to a battery level of the mobile phone and environmental parameters near a charging interface of a user equipment.

FIG. 5 is a schematic structural diagram of a light control device for a user equipment according to Embodiment 4 of the present invention. As shown in FIG. 5, a light control device 41 for a user equipment provided in this embodiment includes:
a detecting module 401, configured to detect an environmental parameter near a charging interface of a user equipment, where the environmental parameter is at least one of: magnetic field strength near the charging interface of the user equipment, a distance between the charging interface of the user equipment and a charger plug, and brightness of light near the charging interface of the user equipment;
a determining module 402, configured to, before the environmental parameter near the charging interface of the user equipment is detected, determine, according to a battery level of the user equipment, whether to detect the environmental parameter near the charging interface of the user equipment; and
a light control module 403, configured to enable a lighting device disposed near the charging interface when the environmental parameter falls within a preset parameter range.

Specifically, the determining module 402 is further configured to, when it is determined that the battery level of the user equipment is less than a preset first threshold, enable detecting of the environmental parameter near the charging interface of the user equipment.

Specifically, when the environmental parameter is the magnetic field strength near the charging interface of the user equipment, the detecting module 401 is specifically configured to enable a Hall sensor disposed near the charging interface of the user equipment, to detect magnetic field strength of a magnet inside the charger plug.

Correspondingly, in this case, the magnet is further disposed inside the charger plug.

Correspondingly, the light control module 403 is specifically configured to:

when the magnetic field strength near the charging interface of the user equipment falls within the preset parameter range and the Hall sensor outputs a preset enabling level value, enable the lighting device disposed near the charging interface.

Specifically, when the environmental parameter is the distance between the charging interface of the user equipment and the charger plug, the detecting module 401 is specifically configured to enable a proximity sensor disposed near the charging interface of the user equipment, to detect the distance between the charging interface and the charger plug.

Correspondingly, the light control module 403 is specifically configured to:
when the distance between the charging interface and the charger plug falls within the preset parameter range and the proximity sensor outputs a preset enabling level value, enable the lighting device disposed near the charging interface.

Specifically, when the environmental parameter is the brightness of light near the charging interface of the user equipment, the detecting module 401 is specifically configured to enable a light sensor disposed near the charging interface of the user equipment, to detect the brightness of light near the charging interface.

Correspondingly, the light control module 403 is specifically configured to:
when the brightness of light near the charging interface falls within the preset parameter range and the light sensor outputs a preset enabling level value, enable the lighting device disposed near the charging interface.

Specifically, when the environmental parameter is a combination value of at least two of: the magnetic field strength near the charging interface of the user equipment, the distance between the charging interface of the user equipment and the charger plug, and the brightness of light near the charging interface of the user equipment, the detecting module 401 is specifically configured to:
enable at least two of: a Hall sensor, a proximity sensor, and a light sensor that are disposed near the charging interface of the user equipment, to detect at least two of: the magnetic field strength near the charging interface of the user equipment, the distance between the charging interface and the charger plug, and the brightness of light near the charging interface.

Correspondingly, the light control module 403 is specifically configured to:
when at least two of: the magnetic field strength near the charging interface of the user equipment, the distance between the charging interface and the charger plug, and the brightness of light near the charging interface fall within the preset parameter range, enable, according to preset enabling level values output by the Hall sensor, the proximity sensor, and the light sensor, the lighting device disposed near the charging interface.

Specifically, after enabling the lighting device disposed near the charging interface, the light control module 403 is further configured to control at least one of: a display color, brightness, and a blinking frequency of the lighting device according to the battery level of the user equipment and/or user service information.

Specifically, after enabling the lighting device disposed near the charging interface, the light control module 403 is further configured to:
control, according to at least one of: a charging state of the user equipment, the battery level of the user equipment, and the environmental parameter near the charging interface of the user equipment, the lighting device to be disabled.

Specifically, the light control module 403 is further configured to:
if duration in which the user equipment is in an uncharged state exceeds a preset second threshold, disable the lighting device; or
if the battery level of the user equipment reaches a preset third threshold, disable the lighting device; or
if the user equipment is in an uncharged state and the environmental parameter falls outside the preset parameter range, disable the lighting device.

In this embodiment, a determining module is configured to detect a battery level of a user equipment; a detecting module is configured to detect an environmental parameter near a charging interface of the user equipment; and a light control module is configured to enable a lighting device disposed near the charging interface when the environmental parameter falls within a preset parameter range. In this way, it is implemented that when a mobile phone is connecting to a charger plug, a lighting and prompting function is provided for a user according to a battery level of the mobile phone and an environmental parameter near a charging interface of a user equipment.

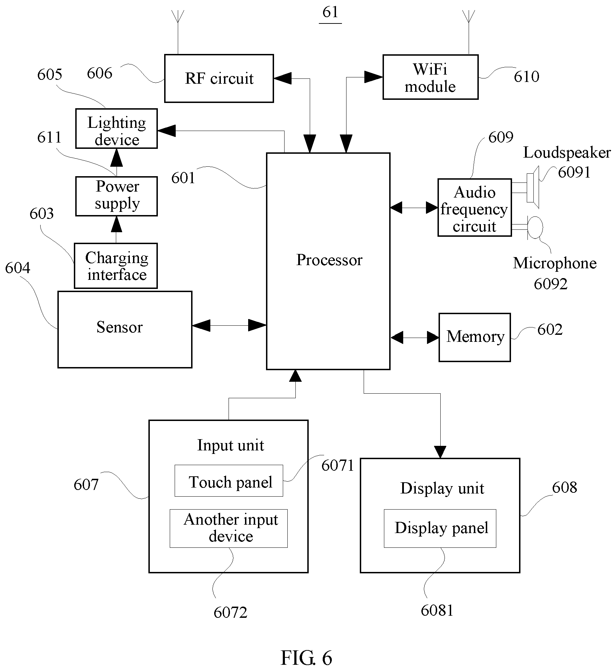

An example of a user terminal is used for specific description. It should be understood that a user terminal 61 shown in FIG. 6 is merely an example of a mobile terminal, the user terminal 61 may have more than or less than parts shown in FIG. 6, and two or more parts may be combined together or different part configuration may exist. Various parts shown in FIG. 6 may be implemented in hardware including one or more signal processing and/or application-specific integrated circuits, in software, or in a combination of hardware and software.

FIG. 6 is a schematic structural diagram of a user terminal according to Embodiment 5 of the present invention. As shown in FIG. 6, this embodiment provides a user terminal.

A user terminal 61 includes a processor 601 and a memory 602; and further includes a charging interface 603, and a sensor 604 and a lighting device 605 that are disposed near the charging interface 603.

In addition, the user terminal 61 further includes parts such as a radio frequency (Radio Frequency, RF for short) circuit 606, an input unit 607, a display unit 608, an audio frequency circuit 609, a Wireless Fidelity (wireless fidelity, WiFi for short) module 610, and a power supply 611.

The processor 601 is configured to run an instruction stored in the memory 602, so as to perform the light control methods for a user equipment provided in Embodiment 1 to 3. The processor 601 is a control center of the user terminal 61; connects all parts of an entire mobile phone through various interfaces and lines; and executes, by running or executing a software program and/or a module stored in the memory 602 and by invoking data stored in the memory 602, various functions and data processing of the user terminal 61, so as to perform overall monitoring on the mobile phone. Optionally, the processor 601 may include one or more processing units. Preferably, an application processor and a modem processor may be integrated into the processor 601. The application processor mainly processes an operating system, a user interface, an application program, and the like. The modem processor mainly processes wireless communications. It may be understood that the foregoing modem processor may also not be integrated into the processor 601.

Specifically, a working manner of the processor 601 is as follows: First, the processor 601 runs the instruction stored in the memory 602 to detect a battery level of the user terminal 61; if the battery level of the user terminal 61 is less than a preset first threshold, the processor 601 controls the sensor 604 to be enabled; the sensor 604 detects an environmental parameter on the side of the charging interface 603; and when the detected environmental parameter falls within a preset parameter range, the processor 601 controls the lighting device 605 disposed on the side of the charging interface 603 to be enabled, where the lighting device 605 may provide light when a user is connecting the user terminal and a charger plug.

The memory 602 is configured to store the instruction. Specifically, storage objects of the memory 602 include a software program and a module, and the processor 601 executes various functional applications and data processing of the user terminal 61 by running the software program and the module that are stored in the memory 602. The memory 602 may mainly include a program storage area and a data storage area. The program storage area may store an operating system, an application program that is required by at least one function (such as a sound playing function or an image playing function), and the like. The data storage area may store data (such as audio data or a phonebook) that is created according to use of the user terminal 61, and the like. In addition, the memory 602 may include a high-speed random access memory, and may further include a non-volatile memory, such as at least one magnetic disk storage device, a flash memory device, or another volatile solid-state storage device.

The charging interface 603 is connected to the charger plug, so as to perform a charging operation on the user terminal 61.

The sensor 604 disposed near the charging interface 603 is configured to detect, under the control of the processor, the environmental parameter near the charging interface. For example, the sensor may be a Hall sensor, a proximity sensor, or a light sensor. The Hall sensor is configured to detect magnetic field strength near a charging interface of a user equipment; the proximity sensor is referred to as a proximity sensor, and is configured to detect a distance between the charging interface and the charger plug; and the light sensor is configured to detect brightness of light near the charging interface.

In addition to the foregoing usages, the light sensor may further adjust brightness of a display panel 6081 according to brightness of ambient light, and the proximity sensor may further disable the display panel 6081 and/or backlight when the user terminal 61 moves near the ear. In addition, the user equipment 61 may further include at least one another sensor, such as a motion sensor or another sensor. Specifically, as a kind of motion sensor, an accelerometer sensor can detect an acceleration value in each direction (generally three axes), can detect a value and a direction of gravity when the mobile phone is static, and may be applied to an application for recognizing a mobile phone posture (such as screen switching between landscape and portrait, a related game, and magnetometer posture calibration), a function related to vibration recognition (such as a pedometer or a tap), and the like; and other sensors, such as a gyroscope, a barometer, a hygrometer, a thermometer, and an infrared sensor, that may also be disposed in the user terminal 61 are not described herein again.

The lighting device 605 is configured to be enabled under the control of the processor 601. Specifically, the lighting device 605 may include a lighting component 6051 for lighting and a prompt light component 6052 for prompting. The lighting device 605 may be a light device made from a light emitting diode (light emitting diode, LED for short), a fluorescent material, a transparent material that may be of light transmission, or the like.

The RF circuit 606 may be configured to send and receive a signal in an information receiving and sending process or a call process, and in particular, after downlink information of a base station is received, send the downlink information to the processor 601 for processing; in addition, send uplink data to the base station. Generally, the RF circuit includes but is not limited to an antenna, at least one amplifier, a transceiver, a coupler, a low noise amplifier (Low Noise Amplifier, LNA for short), a duplexer, and the like. In addition, the RF circuit 606 may further communicate with a network and another device by means of wireless communications. The wireless communications may use any communications standard or protocol that includes but is not limited to Global System for Mobile Communications (Global System of Mobile communication, GSM for short), a general packet radio service (General Packet Radio Service, GPRS for short), Code Division Multiple Access (Code Division Multiple Access, CDMA for short), Wideband Code Division Multiple Access (Wideband Code Division Multiple Access, WCDMA for short), Long Term Evolution (Long Term Evolution, LTE for short), an email, a short message service (Short Messaging Service, SMS for short), and the like. The input unit 607 may be configured to receive input numeral or character information, and generate key signal input related to user setting and function control of the user terminal 61. Specifically, the input unit 607 may include a touch panel 6071 and another input device 6072. The touch panel 6071, also referred to as a touchscreen, may collect a user's touch operation (such as an operation performed by the user on the touch panel 6071 or near the touch panel 6071 by using any proper object or accessory, such as a finger or a stylus) on or near the touch panel 6071, and drive a corresponding connection apparatus according to a preset program. Optionally, the touch panel 6071 may include two parts: a touch detection apparatus and a touch controller. The touch detection apparatus detects a touch direction of a user, detects a signal generated by a touch operation, and transmits the signal to the touch controller. The touch controller receives touch information from the touch detection apparatus, converts the touch information into a touch coordinate, and sends the touch coordinate to the processor 601; and can receive and execute a command sent by the processor 601. In addition, the touch panel 6071 may be implemented in multiple types, such as a resistive type, a capacitive type, an infrared type, and a surface acoustic wave type. The input unit 607 may include the another input device 6072 in addition to the touch panel 6071. Specifically, the another input device 6072 may include but is not limited to one or more of: a physical keyboard, a function key (such as a volume control key or a power on/off key), a trackball, a mouse, a joystick, and the like.

The display unit 608 may be configured to display information input by a user or information provided for a user, and various menus of the user terminal 61. The display unit 608 may include the display panel 6081. Optionally, a liquid crystal display (Liquid Crystal Display, LCD for short) form, an organic light-emitting diode (Organic Light-Emitting Diode, OLED for short) form, or the like may be used to configure the display panel 6081. Further, the touch panel 6071 may cover the display panel 6081. When detecting a touch operation on or near the touch panel 6071, the touch panel 6071 transmits the touch operation to the processor 601 so as to determine a type of the touch event, and then the processor 601 provides corresponding visual output on the display panel 6081 according to the type of the touch event. Although the touch panel 6071 and the display panel 6081 that are shown in the figure are used as two independent parts to implement an input function and an input function of the user terminal 61, in some embodiments, the touch panel 6071 and the display panel 6081 may be integrated to implement the input function and the output function of the user terminal 61.

The audio frequency circuit 609, a loudspeaker 6091, and a microphone 6092 may provide an audio interface between a user and the user terminal 61. The audio frequency circuit 609 may transmit, to the loudspeaker 6091, an electrical signal obtained by converting received audio data, and the loudspeaker 6091 converts the electrical signal into a voice signal for outputting; in another aspect, the microphone 6092 converts a collected voice signal into an electrical signal, and the audio frequency circuit 609 converts the electrical signal into audio data after receiving the electrical signal, and outputs the audio data to the RF circuit 606, so as to send the audio data to, for example, another mobile phone, or output the audio data to the memory 602 for further processing.

WiFi is a short-distance radio transmission technology, and the user terminal 61 may use the WiFi module 610 to help a user send and receive an email, browse a web page, access streaming media, and the like, where the WiFi module provides wireless broadband Internet access for the user. Although FIG. 6 shows the WiFi module 610, it may be understood that, the WiFi module is not a mandatory part of the user terminal 61, and may be omitted according to a need without changing the essence of the present invention.

The user terminal 61 further includes the power supply 611 (such as a battery) that supplies power to each part. Preferably, the power supply may be logically connected to the processor 601 by using a power supply management system, so as to implement functions such as management of charging, discharging, and power consumption by using the power supply management system.

The user terminal 61 may further include a camera, a Bluetooth module, and the like that are not shown in the figure, which are not described herein.

In this embodiment, a memory is configured to store an instruction; a sensor is configured to detect, under the control of a processor, an environmental parameter near a charging interface; a lighting device is configured to be enabled under the control of the processor; and the processor is configured to run the instruction stored in the memory, so as to perform the light control methods for a user equipment provided in the foregoing Embodiment 1 to 3. In this way, it is implemented that when a mobile phone is connecting to a charger plug, a lighting and prompting function is provided for a user according to a battery level of the mobile phone and an environmental parameter near a charging interface of a user equipment.

Persons of ordinary skill in the art may understand that all or some of the steps of the foregoing method embodiments may be implemented by a program instructing relevant hardware. The foregoing program may be stored in a computer-readable storage medium. When the program runs, the steps of the foregoing method embodiments are performed. The foregoing storage medium includes: any medium that can store program code, such as a ROM, a RAM, a magnetic disc, or an optical disc.

Finally, it should be noted that the foregoing embodiments are merely intended for describing the technical solutions of the present invention, but not for limiting the present invention as defined in the claims.

## Claims

1. A light control method, the method performed by a light control apparatus in a user terminal, the method comprising the steps of:
detecting (S101) an environmental parameter, using at least one sensor disposed on one side of a charging interface of the user terminal, wherein the environmental parameter is at least one of: magnetic field strength on the side of the charging interface of the user terminal, a distance between the charging interface of the user terminal and a charger plug, and brightness of light on the side of the charging interface of the user terminal; and
enabling (S102) a lighting device disposed on another side of the charging interface when the environmental parameter falls within a preset parameter range;
wherein before the detecting an environmental parameter on a side of a charging interface of a user terminal, the method further comprises the steps of:
determining, according to a battery level of the user terminal, whether to detect the environmental parameter on the side of the charging interface of the user terminal; and
when it is determined that the battery level of the user terminal is less than a preset first threshold, detecting the environmental parameter on the side of the charging interface of the user terminal.

2. The method according to claim 1, wherein when the environmental parameter is the magnetic field strength on the side of the charging interface of the user terminal, the step of detecting an environmental parameter on a side of a charging interface of a user terminal specifically comprises:
the step of enabling a Hall sensor among the at least sensor disposed on the side of the charging interface of the user terminal, and detecting, using the Hall sensor, the magnetic field strength on the side of the charging interface of the user terminal; and
correspondingly, the step of enabling a lighting device disposed on another side of the charging interface when the environmental parameter falls within a preset parameter range specifically comprises:
when the magnetic field strength on the side of the charging interface of the user terminal falls within the preset parameter range and the Hall sensor outputs a preset enabling level value, enabling the lighting device disposed on the another side of the charging interface.

3. The method according to claim 1, wherein when the environmental parameter is the distance between the charging interface of the user terminal and the charger plug, the step of detecting an environmental parameter on a side of a charging interface of a user terminal specifically comprises:
the step of enabling a proximity sensor among the at least sensor disposed on the side of the charging interface of the user terminal, and detecting, using the proximity sensor, the distance between the charging interface and the charger plug; and
correspondingly, the step of enabling a lighting device disposed on another side of the charging interface when the environmental parameter falls within a preset parameter range specifically comprises:
when the distance between the charging interface and the charger plug falls within the preset parameter range and the proximity sensor outputs a preset enabling level value, enabling the lighting device disposed on the another side of the charging interface.

4. The method according to claim 1, wherein when the environmental parameter is the brightness of light on the side of the charging interface of the user terminal, the step of detecting an environmental parameter on a side of a charging interface of a user terminal specifically comprises:
the step of enabling a light sensor among the at least sensor disposed on the side of the charging interface of the user terminal, and detecting, using the light sensor, the brightness of light on the side of the charging interface; and
correspondingly, the step of enabling a lighting device disposed on another side of the charging interface when the environmental parameter falls within a preset parameter range specifically comprises:
when the brightness of light on the side of the charging interface falls within the preset parameter range and the light sensor outputs a preset enabling level value, enabling the lighting device disposed on the another side of the charging interface.

5. The method according to claim 1, wherein when the environmental parameter is a combination value of at least two of: the magnetic field strength on the side of the charging interface of the user terminal, the distance between the charging interface of the user terminal and the charger plug, and the brightness of light on the side of the charging interface of the user terminal, the step of detecting an environmental parameter on a side of a charging interface of a user terminal specifically comprises:
the step of enabling (S301) at least two of: a Hall sensor, a proximity sensor, and a light sensor among the at least one sensor disposed on the side of the charging interface of the user terminal, and detecting, using the at least sensors, at least two of: the magnetic field strength on the side of the charging interface of the user terminal, the distance between the charging interface and the charger plug, and the brightness of light on the side of the charging interface; and
correspondingly, the step of enabling a lighting device disposed on another side of the charging interface when the environmental parameter falls within a preset parameter range specifically comprises:
when at least two of: the magnetic field strength on the side of the charging interface of the user terminal, the distance between the charging interface and the charger plug, and the brightness of light on the side of the charging interface fall within the preset parameter range, enabling (S302), according to preset enabling level values output by the Hall sensor, the proximity sensor, and the light sensor, the lighting device disposed on the another side of the charging interface.

6. The method according to any one of claims 1 to 5, wherein after the step of enabling a lighting device disposed on another side of the charging interface, the method further comprises:
the step of controlling (S203) at least one of: a display color, brightness, and a blinking frequency of the lighting device according to the battery level of the user terminal and/or user service information.

7. The method according to any one of claims 1 to 6, wherein after the step of enabling a lighting device disposed on another side of the charging interface, the method further comprises:
the step of controlling (S204), according to at least one of: a charging state of the user terminal, the battery level of the user terminal, and the environmental parameter on the side of the charging interface of the user terminal, the lighting device to be disabled, which specifically comprises:
if duration in which the user terminal is in an uncharged state exceeds a preset second threshold, disabling the lighting device; or
if the battery level of the user terminal reaches a preset third threshold, disabling the lighting device; or
if the user terminal is in an uncharged state and the environmental parameter falls outside the preset parameter range, disabling the lighting device.

8. A light control apparatus included in a user terminal, comprising:
a detecting module (401), configured to detect an environmental parameter using at least one sensor disposed on one side of a charging interface of the user terminal, wherein the environmental parameter is at least one of: magnetic field strength on the side of the charging interface of the user terminal, a distance between the charging interface of the user terminal and a charger plug, and brightness of light on the side of the charging interface of the user terminal;
a determining module (402), configured to, before the environmental parameter on the side of the charging interface of the user terminal is detected, determine, according to a battery level of the user terminal, whether to detect the environmental parameter on the side of the charging interface of the user terminal; and
a light control module (403), configured to enable a lighting device disposed on another side of the charging interface when the environmental parameter falls within a preset parameter range;
wherein the determining module is further configured to:
when it is determined that the battery level of the user terminal is less than a preset first threshold, enable detecting of the environmental parameter on the side of the charging interface of the user terminal.

9. The light control apparatus for a user terminal according to claim 8, wherein when the environmental parameter is the magnetic field strength on the side of the charging interface of the user terminal, the detecting module is specifically configured to:
enable a Hall sensor among the at least sensor disposed on the side of the charging interface of the user terminal, and detect, using the Hall sensor, magnetic field strength of a magnet inside the charger plug; and
correspondingly, the light control module is specifically configured to:
when the magnetic field strength on the side of the charging interface of the user terminal is within the preset parameter range and an output of the Hall sensor is a preset enabling level value, enable the lighting device disposed on the another side of the charging interface; wherein the magnet is further disposed inside the charger plug.

10. The light control apparatus for a user terminal according to claim 8, wherein when the environmental parameter is the distance between the charging interface of the user terminal and the charger plug, the detecting module is specifically configured to:
enable a proximity sensor among the at least sensor disposed on the side of the charging interface of the user terminal, and detect, using the proximity sensor, the distance between the charging interface and the charger plug; and
correspondingly, the light control module is specifically configured to:
when the distance between the charging interface and the charger plug is within the preset parameter range and an output of the proximity sensor is a preset enabling level value, enable the lighting device disposed on the another side of the charging interface.

11. The light control apparatus for a user terminal according to claim 8, wherein when the environmental parameter is the brightness of light on the side of the charging interface of the user terminal, the detecting module is specifically configured to:
enable a light sensor among the at least sensor disposed on the side of the charging interface of the user terminal, and detect, using the light sensor, the brightness of light on the side of the charging interface; and
correspondingly, the light control module is specifically configured to:
when the brightness of light on the side of the charging interface is within the preset parameter range and an output of the light sensor is a preset enabling level value, enable the lighting device disposed on the another side of the charging interface.

12. The light control apparatus for a user terminal according to claim 8, wherein when the environmental parameter is a combination value of at least two of: the magnetic field strength on the side of the charging interface of the user terminal, the distance between the charging interface of the user terminal and the charger plug, and the brightness of light on the side of the charging interface of the user terminal, the detecting module is specifically configured to:
enable at least two of: a Hall sensor, a proximity sensor, and a light sensor among the at least sensor disposed on the side of the charging interface of the user terminal, and detect, using the at least two sensors, at least two of: the magnetic field strength on the side of the charging interface of the user terminal, the distance between the charging interface and the charger plug, and the brightness of light on the side of the charging interface; and
correspondingly, the light control module is specifically configured to:
when at least two of: the magnetic field strength on the side of the charging interface of the user terminal, the distance between the charging interface and the charger plug, and the brightness of light on the side of the charging interface fall within the preset parameter range, enable, according to preset enabling level values output by the Hall sensor, the proximity sensor, and the light sensor, the lighting device disposed on the another side of the charging interface.

13. The light control apparatus for a user terminal according to any one of claims 8 to 12, wherein after enabling the lighting device disposed on the another side of the charging interface, the light control module is further configured to control at least one of: a display color, brightness, and a blinking frequency of the lighting device according to the battery level of the user terminal and/or user service information.

14. The light control apparatus for a user terminal according to any one of claims 8 to 13, wherein after enabling the lighting device disposed on the another side of the charging interface, the light control module is further configured to:
control, according to at least one of: a charging state of the user terminal, the battery level of the user terminal, and the environmental parameter on the side of the charging interface of the user terminal, the lighting device to be disabled, which specifically comprises:
if duration in which the user terminal is in an uncharged state exceeds a preset second threshold, disabling the lighting device; or
if the battery level of the user terminal reaches a preset third threshold, disabling the lighting device; or
if the user terminal is in an uncharged state and the environmental parameter falls outside the preset parameter range, disabling the lighting device.

15. A user terminal (61), comprising: a processor (601) and a memory (602); and further comprising: a light control apparatus according to any one of claims 8 to 14.

## Patentansprüche

1. Lichtsteuerungsverfahren, wobei das Verfahren von einem Lichtsteuerapparat in einem Benutzerterminal ausgeführt wird, wobei das Verfahren die folgenden Schritte umfasst:
Erfassen (S101) eines Umgebungsparameters, Verwenden mindestens eines Sensors, der auf einer Seite einer Ladeschnittstelle des Benutzerterminals angeordnet ist, wobei der Umgebungsparameter mindestens einer ist: der Magnetfeldstärke auf der Seite der Ladeschnittstelle des Benutzerterminals, eines Abstands zwischen der Ladeschnittstelle des Benutzerterminals und einem Ladegerätstecker, und der Helligkeit von Licht auf der Seite der Ladeschnittstelle des Benutzerterminals; und
Aktivieren (S102) einer Beleuchtungsvorrichtung, die auf einer anderen Seite der Ladeschnittstelle angeordnet ist, wenn der Umgebungsparameter innerhalb eines voreingestellten Parameterbereichs fällt;
wobei vor dem Erfassen eines Umgebungsparameters auf einer Seite der Ladeschnittstelle eines Benutzerterminals das Verfahren ferner die Schritte umfasst:
des Bestimmens gemäß einem Batteriepegel des Benutzerterminals, ob der Umgebungsparameter auf der Seite der Ladeschnittstelle des Benutzerterminals erfasst werden soll; und
wenn bestimmt wird, dass der Batteriepegel des Benutzerterminals kleiner ist als ein voreingestellte erster Schwellenwert, Erfassen des Umgebungsparameters auf der Seite der Ladeschnittstelle des Benutzerterminals.

2. Verfahren nach Anspruch 1, wobei, wenn der Umgebungsparameter die Magnetfeldstärke auf der Seite der Ladeschnittstelle des Benutzerterminals ist, der Schritt des Erfassens eines Umgebungsparameters auf einer Seite einer Ladeschnittstelle eines Benutzerterminals spezifisch Folgendes umfasst:
den Schritt des Aktivierens eines Hallsensors unter dem mindestens einen Sensor, der auf der Seite der Ladeschnittstelle des Benutzerterminals angeordnet ist, und, unter Verwenden des Hallsensors, Erfassen der Magnetfeldstärke auf der Seite der Ladeschnittstelle des Benutzerterminals; und
entsprechend der Schritt des Aktivierens der Beleuchtungsvorrichtung, die auf einer anderen Seite der Ladeschnittstelle angeordnet ist, wenn der Umgebungsparameter in einen voreingestellten Parameterbereich fällt, spezifisch Folgendes umfasst:
wenn die Magnetfeldstärke auf der Seite der Ladeschnittstelle des Benutzerterminals in den voreingestellten Parameterbereich fällt und der Hallsensor einen voreingestellten Aktivierungspegelwert ausgibt, Aktivieren der Beleuchtungsvorrichtung, die auf der anderen Seite der Ladeschnittstelle angeordnet ist.

3. Verfahren nach Anspruch 1, wobei, wenn der Umgebungsparameter der Abstand zwischen der Ladeschnittstelle des Benutzerterminals und dem Ladegerätstecker ist, der Schritt des Erfassens eines Umgebungsparameters auf einer Seite einer Ladeschnittstelle eines Benutzerterminals spezifisch Folgendes umfasst:
den Schritt des Aktivierens eines Näherungssensors unter dem mindestens einen Sensor, der auf der Seite der Ladeschnittstelle des Benutzerterminals angeordnet ist, und, unter Verwenden des Näherungssensors, Erfassen des Abstands zwischen der Ladeschnittstelle und dem Ladegerätstecker; und
entsprechend der Schritt des Aktivierens einer Beleuchtungsvorrichtung, die auf einer anderen Seite der Ladeschnittstelle angeordnet ist, wenn der Umgebungsparameter in einen vorbestimmten Parameterbereich fällt, spezifisch Folgendes umfasst:
wenn der Abstand zwischen der Ladeschnittstelle und dem Ladegerätstecker in den voreingestellten Parameterbereich fällt und der Näherungssensor einen voreingestellten Aktivierungspegelwert ausgibt, die Beleuchtungsvorrichtung, die auf der anderen Seite der Ladeschnittstelle angeordnet ist, aktiviert wird.

4. Verfahren nach Anspruch 1, wobei, wenn der Umgebungsparameter die Helligkeit von Licht auf der Seite der Ladeschnittstelle des Benutzerterminals ist, der Schritt des Erfassens eines Umgebungsparameters auf einer Seite einer Ladeschnittstelle eines Benutzerterminals spezifisch Folgendes umfasst:
den Schritt des Aktivierens eines Lichtsensors unter dem mindestens einen Sensor, der auf der Seite der Ladeschnittstelle des Benutzerterminals angeordnet ist, und, unter Verwenden des Lichtsensors, Erfassen der Helligkeit von Licht auf der Seite der Ladeschnittstelle; und
entsprechend der Schritt des Aktivierens einer Beleuchtungsvorrichtung, die auf einer anderen Seite der Ladeschnittstelle angeordnet ist, wenn der Umgebungsparameter in den voreingestellten Parameterbereich fällt, spezifisch Folgendes umfasst:
wenn die Helligkeit von Licht auf der Seite der Ladeschnittstelle in den voreingestellten Parameterbereich fällt und der Lichtsensor einen voreingestellten Aktivierungspegelwert ausgibt, Aktivieren der Beleuchtungsvorrichtung, die auf der anderen Seite der Ladeschnittstelle angeordnet ist.

5. Verfahren nach Anspruch 1, wobei, wenn der Umgebungsparameter ein Kombinationswert ist von mindestens zwei: der Magnetfeldstärke auf der Seite der Ladeschnittstelle des Benutzerterminals, des Abstands zwischen der Ladeschnittstelle des Benutzerterminals und dem Ladegerätstecker und der Helligkeit von Licht auf der Seite der Ladeschnittstelle des Benutzerterminals, der Schritt des Erfassens eines Umgebungsparameters auf einer Seite einer Ladeschnittstelle eines Benutzerterminals spezifisch Folgendes umfasst:
den Schritt des Aktivierens (S301) von mindestens zwei: eines Hallsensors, eines Näherungssensors und eines Lichtsensors unter dem mindestens einen Sensor, der auf der Seite der Ladeschnittstelle des Benutzerterminals angeordnet ist, und, unter Verwenden des mindestens einen Sensors, Erfassen von mindestens zwei: der Magnetfeldstärke auf der Seite der Ladeschnittstelle des Benutzerterminals, des Abstands zwischen der Ladeschnittstelle des Benutzerterminals und dem Ladegerätstecker, und der Helligkeit von Licht auf der Seite der Ladeschnittstelle; und
entsprechend der Schritt des Aktivierens einer Beleuchtungsvorrichtung, die auf einer anderen Seite der Ladeschnittstelle angeordnet ist, wenn der Umgebungsparameter in einen voreingestellten Parameterbereich fällt, spezifisch Folgendes umfasst:
wenn mindestens zwei: der Magnetfeldstärke auf der Seite der Ladeschnittstelle des Benutzerterminals, des Abstands zwischen der Ladeschnittstelle und dem Ladegerätstecker, und der Helligkeit von Licht auf der Seite der Ladeschnittstelle in den voreingestellten Parameterbereich fallen, Aktivieren (S302) gemäß voreingestellten Aktivierungspegelwerten, die von dem Hallsensor, dem Näherungssensor und dem Lichtsensor ausgegeben werden, der Beleuchtungsvorrichtung, die auf der anderen Seite der Ladeschnittstelle angeordnet ist.

6. Verfahren nach einem der Ansprüche 1 bis 5, wobei nach dem Schritt des Aktivierens einer Beleuchtungsvorrichtung, die auf einer anderen Seite der Ladeschnittstelle angeordnet ist, das Verfahren ferner Folgendes umfasst:
den Schritt des Prüfens (S203) mindestens einer: einer Anzeigefarbe, Helligkeit und Blinkfrequenz der Beleuchtungsvorrichtung gemäß dem Batteriepegel des Benutzerterminals und/oder Benutzerdienstinformationen.

7. Verfahren nach einem der Ansprüche 1 bis 6, wobei nach dem Schritt des Aktivierens einer Beleuchtungsvorrichtung, die auf einer anderen Seite der Ladeschnittstelle angeordnet ist, das Verfahren ferner Folgendes umfasst:
den Schritt des Prüfens (S204) mindestens eines: eines Ladezustands des Benutzerterminals, des Batteriepegels des Benutzerterminals und des Umgebungsparameters auf der Seite der Ladeschnittstelle des Benutzerterminals, die Beleuchtungsvorrichtung, die zu deaktivieren ist, spezifisch Folgendes umfasst:
falls die Dauer, während der das Benutzerterminal in einem nicht geladenen Zustand ist, einen vorbestimmten zweiten Schwellenwert überschreitet, Deaktivieren der Beleuchtungsvorrichtung; oder
falls der Batteriepegel des Benutzerterminals einen voreingestellten dritten Schwellenwert erreicht, Deaktivieren der Beleuchtungsvorrichtung; oder
falls das Benutzerterminal in einem nicht geladenen Zustand ist und der Umgebungsparameter außerhalb des voreingestellten Parameterbereichs fällt, Deaktivieren der Beleuchtungsvorrichtung.

8. Lichtsteuerapparat, der in einem Benutzerterminal enthalten ist, das Folgendes umfasst:
ein Erfassungsmodul (401), das konfiguriert ist, um einen Umgebungsparameter unter Verwenden mindestens eines Sensors zu erfassen, der auf einer Seite einer Ladeschnittstelle des Benutzerterminals angeordnet ist, wobei der Umgebungsparameter mindestens einer ist: einer Magnetfeldstärke auf der Seite der Ladeschnittstelle des Benutzerterminals, eines Abstands zwischen der Ladeschnittstelle des Benutzerterminals und einem Ladegerätstecker, und einer Helligkeit von Licht auf der Seite der Ladeschnittstelle des Benutzerterminals;
ein Bestimmungsmodul (402), das konfiguriert ist, um, bevor der Umgebungsparameter auf der Seite der Ladeschnittstelle des Benutzerterminals erfasst wird, gemäß einem Batteriepegel des Benutzerterminals zu bestimmen, ob der Umgebungsparameter auf der Seite der Ladeschnittstelle des Benutzerterminals erfasst werden soll; und
ein Lichtsteuermodul (403), das konfiguriert ist, um eine Beleuchtungsvorrichtung zu aktivieren, die auf einer anderen Seite der Ladeschnittstelle angeordnet ist, wenn der Umgebungsparameter innerhalb eines voreingestellten Parameterbereichs fällt;
wobei das Bestimmungsmodul ferner konfiguriert ist, um:
wenn bestimmt wird, dass der Batteriepegel des Benutzerterminals kleiner ist als ein voreingestellter erster Schwellenwert, das Erfassen des Umgebungsparameters auf der Seite der Ladeschnittstelle des Benutzerterminals aktiviert wird.

9. Lichtsteuerapparat für ein Benutzerterminal nach Anspruch 8, wobei, wenn der Umgebungsparameter die Magnetfeldstärke auf der Seite der Ladeschnittstelle des Benutzerterminals ist, das Erfassungsmodul spezifisch konfiguriert ist, um:
einen Hallsensor unter dem mindestens einen Sensor, der auf der Seite der Ladeschnittstelle des Benutzerterminals angeordnet ist, zu aktivieren, und, unter Verwenden des Hallsensors, die Magnetfeldstärke eines Magnets innerhalb des Ladegerätsteckers zu erfassen; und
das Lichtsteuermodul entsprechend spezifisch konfiguriert ist, um:
wenn die Magnetfeldstärke auf der Seite der Ladeschnittstelle des Benutzerterminals in den voreingestellten Parameterbereich fällt und ein Ausgang des Hallsensors ein voreingestellter Aktivierungspegelwert ist, die Beleuchtungsvorrichtung, die auf der anderen Seite der Ladeschnittstelle angeordnet ist, zu aktivieren; wobei der Magnet ferner innerhalb des Ladegerätsteckers angeordnet ist.

10. Lichtsteuerapparat für ein Benutzerterminal nach Anspruch 8, wobei, wenn der Umgebungsparameter der Abstand zwischen der Ladeschnittstelle des Benutzerterminals und dem Ladegerätstecker ist, das Erfassungsmodul spezifisch konfiguriert ist, um:
einen Näherungssensor unter dem mindestens einen Sensor, der auf der Seite der Ladeschnittstelle des Benutzerterminals angeordnet ist, zu aktivieren, und unter Verwenden des Näherungssensors den Abstand zwischen der Ladeschnittstelle und dem Ladegerätstecker zu erfassen; und
das Lichtsteuermodul entsprechend spezifisch konfiguriert ist, um:
wenn der Abstand zwischen der Ladeschnittstelle und dem Ladegerätstecker in den voreingestellten Parameterbereich fällt und der Näherungssensor ein voreingestellter Aktivierungspegelwert ist, die Beleuchtungsvorrichtung, die auf der anderen Seite der Ladeschnittstelle angeordnet ist, zu aktivieren.

11. Lichtsteuerapparat für ein Benutzerterminal nach Anspruch 8, wobei, wenn der Umgebungsparameter die Helligkeit von Licht auf der Seite der Ladeschnittstelle des Benutzerterminals ist, das Erfassungsmodul spezifisch konfiguriert ist, um:
einen Lichtsensor unter dem mindestens einen Sensor, der auf der Seite der Ladeschnittstelle des Benutzerterminals angeordnet ist, zu aktivieren und, unter Verwenden des Lichtsensors, die Helligkeit von Licht auf der Seite der Ladeschnittstelle zu erfassen; und
das Lichtsteuermodul entsprechend spezifisch konfiguriert ist, um:
wenn die Helligkeit von Licht auf der Seite der Ladeschnittstelle in den voreingestellten Parameterbereich fällt und ein Ausgang des Lichtsensors ein voreingestellter Aktivierungspegelwert ist, die Beleuchtungsvorrichtung, die auf der anderen Seite der Ladeschnittstelle angeordnet ist, zu aktivieren.

12. Lichtsteuerapparat für ein Benutzerterminal nach Anspruch 8, wobei, wenn der Umgebungsparameter ein Kombinationswert ist von mindestens zwei: der Magnetfeldstärke auf der Seite der Ladeschnittstelle des Benutzerterminals, des Abstands zwischen der Ladeschnittstelle des Benutzerterminals und dem Ladegerätstecker, und der Helligkeit von Licht auf der Seite der Ladeschnittstelle des Benutzerterminals, das Erfassungsmodul spezifisch konfiguriert ist, um:
mindestens zwei zu aktivieren: eines Hallsensors, eines Näherungssensors und eines Lichtsensors unter dem mindestens einen Sensor, der auf der Seite der Ladeschnittstelle des Benutzerterminals angeordnet ist, und, unter Verwenden der mindestens zwei Sensoren, mindestens zwei zu erfassen: der Magnetfeldstärke auf der Seite der Ladeschnittstelle des Benutzerterminals, des Abstands zwischen der Ladeschnittstelle des Benutzerterminals und dem Ladegerätstecker, und der Helligkeit von Licht auf der Seite der Ladeschnittstelle; und
das Lichtsteuermodul entsprechend spezifisch konfiguriert ist, um:
wenn mindestens zwei: der Magnetfeldstärke auf der Seite der Ladeschnittstelle des Benutzerterminals, des Abstands zwischen der Ladeschnittstelle und dem Ladegerätstecker, und der Helligkeit von Licht auf der Seite der Ladeschnittstelle in den voreingestellten Parameterbereich fallen, gemäß einem voreingestellten Aktivierungspegelwert, der von dem Hallsensor, dem Näherungssensor und dem Lichtsensor ausgegeben wird, die Beleuchtungsvorrichtung, die auf der anderen Seite der Ladeschnittstelle angeordnet ist, zu aktivieren.

13. Lichtsteuerapparat für ein Benutzerterminal nach einem der Ansprüche 8 bis 12, wobei nach dem Aktivieren der Beleuchtungsvorrichtung, die auf der anderen Seite der Ladeschnittstelle angeordnet ist, das Lichtsteuermodul ferner konfiguriert ist, um mindestens eine zu steuern: einer Anzeigefarbe, Helligkeit und Blinkfrequenz der Beleuchtungsvorrichtung gemäß dem Batteriepegel des Benutzerterminals und/oder Benutzerdienstinformationen.

14. Lichtsteuerapparat für ein Benutzerterminal nach einem der Ansprüche 8 bis 13, wobei nach dem Aktivieren der Beleuchtungsvorrichtung, die auf der anderen Seite der Ladeschnittstelle angeordnet ist, das Lichtsteuermodul ferner konfiguriert ist, um:
gemäß mindestens einem: eines Ladezustands des Benutzerterminals, des Batteriepegels des Benutzerterminals und des Umgebungsparameters auf der Seite der Ladeschnittstelle des Benutzerterminals, der Beleuchtungsvorrichtung, die zu deaktivieren ist, zu steuern, was spezifisch Folgendes umfasst:
falls die Dauer, während der das Benutzerterminal in einem nicht geladenen Zustand ist, einen vorbestimmten zweiten Schwellenwert überschreitet, die Beleuchtungsvorrichtung zu deaktivieren; oder
falls der Batteriepegel des Benutzerterminals einen voreingestellten dritten Schwellenwert erreicht, die Beleuchtungsvorrichtung zu deaktivieren; oder
falls das Benutzerterminal in einem nicht geladenen Zustand ist und der Umgebungsparameter außerhalb des voreingestellten Parameterbereichs fällt, die Beleuchtungsvorrichtung zu deaktivieren.

15. Benutzerterminal (61), das Folgendes umfasst: einen Prozessor (601) und einen Speicher (602); und das weiter Folgendes umfasst: einen Lichtsteuerapparat nach einem der Ansprüche 8 bis 14.

## Revendications

1. Procédé de commande de lumière, le procédé étant réalisé par un appareil de commande de lumière dans un terminal d'utilisateur, le procédé comprenant les étapes consistant à :
détecter (S101) un paramètre environnemental, au moyen d'au moins un capteur disposé sur un côté d'une interface de chargement du terminal d'utilisateur, le paramètre environnemental étant au moins un paramètre parmi : une puissance de champ magnétique sur le côté de l'interface de chargement du terminal d'utilisateur, une distance entre l'interface de chargement du terminal d'utilisateur et une prise de chargeur, et une intensité de lumière sur le côté de l'interface de chargement du terminal d'utilisateur ; et
activer (S102) un dispositif d'éclairage disposé sur un autre côté de l'interface de chargement quand le paramètre environnemental se situe dans une plage de paramètres prédéfinie ;
le procédé comprenant en outre, avant la détection d'un paramètre environnemental sur un côté d'une interface de chargement du terminal d'utilisateur, les étapes consistant à :
déterminer, selon un niveau de batterie du terminal d'utilisateur, s'il faut détecter le paramètre environnemental sur le côté de l'interface de chargement du terminal d'utilisateur ; et
quand il est déterminé que le niveau de batterie du terminal d'utilisateur est inférieur à un premier seuil prédéfini, détecter le paramètre environnemental sur le côté de l'interface de chargement du terminal d'utilisateur.

2. Procédé selon la revendication 1, dans lequel, quand le paramètre environnemental est la puissance de champ magnétique sur le côté de l'interface de chargement du terminal d'utilisateur, l'étape de détection d'un paramètre environnemental sur un côté d'une interface de chargement d'un terminal d'utilisateur comprend spécifiquement :
l'étape consistant à activer un capteur Hall parmi l'au moins un capteur disposé sur le côté de l'interface de chargement du terminal d'utilisateur, et détecter, au moyen du capteur Hall, la puissance de champ magnétique sur le côté de l'interface de chargement du terminal d'utilisateur ; et
parallèlement, l'étape d'activation d'un dispositif d'éclairage disposé sur un autre côté de l'interface de chargement quand le paramètre environnemental se situe dans une plage de paramètres prédéfinie consiste spécifiquement à :
quand la puissance de champ magnétique sur le côté de l'interface de chargement du terminal d'utilisateur se situe dans la plage de paramètres prédéfinie et le capteur Hall émet une valeur de niveau d'activation prédéfinie, activer le dispositif d'éclairage disposé sur l'autre côté de l'interface de chargement.

3. Procédé selon la revendication 1, dans lequel, quand le paramètre environnemental est la distance entre l'interface de chargement du terminal d'utilisateur et la prise de chargeur, l'étape de détection d'un paramètre environnemental sur un côté d'une interface de chargement d'un terminal d'utilisateur comprend spécifiquement :
l'étape consistant à activer un capteur de proximité parmi l'au moins un capteur disposé sur le côté de l'interface de chargement du terminal d'utilisateur, et détecter, au moyen du capteur de proximité, la distance entre l'interface de chargement et la prise de chargeur ; et
parallèlement, l'étape d'activation d'un dispositif d'éclairage disposé sur un autre côté de l'interface de chargement quand le paramètre environnemental se situe dans une plage de paramètres prédéfinie consiste spécifiquement à :
quand la distance entre l'interface de chargement et la prise de chargeur tombe dans la plage de paramètres prédéfinie et le capteur de proximité émet une valeur de niveau d'activation prédéfinie, activer le dispositif d'éclairage disposé sur l'autre côté de l'interface de chargement.

4. Procédé selon la revendication 1, dans lequel, quand le paramètre environnemental est la intensité de lumière sur le côté de l'interface de chargement du terminal d'utilisateur, l'étape de détection d'un paramètre environnemental sur un côté d'une interface de chargement d'un terminal d'utilisateur comprend spécifiquement :
l'étape consistant à activer un capteur de lumière parmi l'au moins un capteur disposé sur le côté de l'interface de chargement du terminal d'utilisateur, et détecter, au moyen du capteur de lumière, la intensité de lumière sur le côté de l'interface de chargement ; et
parallèlement, l'étape d'activation d'un dispositif d'éclairage disposé sur un autre côté de l'interface de chargement quand le paramètre environnemental se situe dans une plage de paramètres prédéfinie consiste spécifiquement à :
quand la intensité de lumière sur le côté de l'interface de chargement se situe dans la plage de paramètres prédéfinie et le capteur de lumière émet une valeur de niveau d'activation prédéfinie, activer le dispositif d'éclairage disposé sur l'autre côté de l'interface de chargement.

5. Procédé selon la revendication 1, dans lequel, quand le paramètre environnemental est une valeur de combinaison d'au moins deux paramètres parmi : la puissance de champ magnétique sur le côté de l'interface de chargement du terminal d'utilisateur, la distance entre l'interface de chargement du terminal d'utilisateur et la prise de chargeur, et la intensité de lumière sur le côté de l'interface de chargement du terminal d'utilisateur, l'étape de détection d'un paramètre environnemental sur un côté d'une interface de chargement d'un terminal d'utilisateur comprend spécifiquement :
l'étape consistant à activer (S301) au moins deux capteurs parmi : un capteur Hall, un capteur de proximité et un capteur de lumière parmi l'au moins un capteur disposé sur le côté de l'interface de chargement du terminal d'utilisateur, et détecter, au moyen des au moins deux capteurs, au moins deux paramètres parmi : la puissance de champ magnétique sur le côté de l'interface de chargement du terminal d'utilisateur, la distance entre l'interface de chargement et la prise de chargeur, et la intensité de lumière sur le côté de l'interface de chargement ; et
parallèlement, l'étape d'activation d'un dispositif d'éclairage disposé sur un autre côté de l'interface de chargement quand le paramètre environnemental se situe dans une plage de paramètres prédéfinie consiste spécifiquement à :
quand au moins deux paramètres parmi : la puissance de champ magnétique sur le côté de l'interface de chargement du terminal d'utilisateur, la distance entre l'interface de chargement et la prise de chargeur, et la intensité de lumière sur le côté de l'interface de chargement se situent dans la plage de paramètres prédéfinie, activer (S302), selon des valeurs de niveau d'activation prédéfinies émises par le capteur Hall, le capteur de proximité et le capteur de lumière, le dispositif d'éclairage disposé sur l'autre côté de l'interface de chargement.

6. Procédé selon l'une quelconque des revendications 1 à 5, le procédé comprenant en outre, après l'étape d'activation d'un dispositif d'éclairage disposé sur un autre côté de l'interface de chargement :
l'étape consistant à commander (S203) au moins un paramètre parmi : une couleur d'affichage, une luminosité et une fréquence de clignotement du dispositif d'éclairage selon le niveau de batterie du terminal d'utilisateur et/ou une information de service d'utilisateur.

7. Procédé selon l'une quelconque des revendications 1 à 6, le procédé comprenant en outre, après l'étape d'activation d'un dispositif d'éclairage disposé sur un autre côté de l'interface de chargement :
l'étape consistant à commander (S204), selon au moins un paramètre parmi : un état de chargement du terminal d'utilisateur, le niveau de batterie du terminal d'utilisateur et le paramètre environnemental sur le côté de l'interface de chargement du terminal d'utilisateur, la désactivation du dispositif d'éclairage, ce qui consiste spécifiquement à :
si une durée pendant laquelle le terminal d'utilisateur est dans un état déchargé dépasse un deuxième seuil prédéfini, désactiver le dispositif d'éclairage ; ou
si le niveau de batterie du terminal d'utilisateur atteint un troisième seuil prédéfini, désactiver le dispositif d'éclairage ; ou
si le terminal d'utilisateur est dans un état déchargé et le paramètre environnemental se situe hors de la plage de paramètres prédéfinie, désactiver le dispositif d'éclairage.

8. Appareil de commande de lumière inclus dans un terminal d'utilisateur, comprenant :
un module de détection (401), configuré pour détecter un paramètre environnemental, au moyen d'au moins un capteur disposé sur un côté d'une interface de chargement du terminal d'utilisateur, le paramètre environnemental étant au moins un paramètre parmi : une puissance de champ magnétique sur le côté de l'interface de chargement du terminal d'utilisateur, une distance entre l'interface de chargement du terminal d'utilisateur et une prise de chargeur, et une intensité de lumière sur le côté de l'interface de chargement du terminal d'utilisateur ;
un module de détermination (402), configuré pour, avant la détection du paramètre environnemental sur le côté de l'interface de chargement du terminal d'utilisateur, déterminer, selon un niveau de batterie du terminal d'utilisateur, s'il faut détecter le paramètre environnemental sur le côté de l'interface de chargement du terminal d'utilisateur ; et
un module de commande de lumière (403), configuré pour activer un dispositif d'éclairage disposé sur un autre côté de l'interface de chargement quand le paramètre environnemental se situe dans une plage de paramètres prédéfinie ;
le module de détermination étant en outre configuré pour :
quand il est déterminé que le niveau de batterie du terminal d'utilisateur est inférieur à un premier seuil prédéfini, activer la détection du paramètre environnemental sur le côté de l'interface de chargement du terminal d'utilisateur.

9. Appareil de commande de lumière pour un terminal d'utilisateur selon la revendication 8, dans lequel, quand le paramètre environnemental est la puissance de champ magnétique sur le côté de l'interface de chargement du terminal d'utilisateur, le module de détection est spécifiquement configuré pour :
activer un capteur Hall parmi l'au moins un capteur disposé sur le côté de l'interface de chargement du terminal d'utilisateur, et détecter, au moyen du capteur Hall, la puissance de champ magnétique d'un aimant à l'intérieur de la prise de chargeur ; et parallèlement, le module de commande de lumière est spécifiquement configuré pour :
quand la puissance de champ magnétique sur le côté de l'interface de chargement du terminal d'utilisateur est dans la plage de paramètres prédéfinie et une sortie du capteur Hall est une valeur de niveau d'activation prédéfinie, activer le dispositif d'éclairage disposé sur l'autre côté de l'interface de chargement ; l'aimant étant en outre disposé à l'intérieur de la prise de chargeur.

10. Appareil de commande de lumière pour un terminal d'utilisateur selon la revendication 8, dans lequel, quand le paramètre environnemental est la distance entre l'interface de chargement du terminal d'utilisateur et la prise de chargeur, le module de détection est spécifiquement configuré pour :
activer un capteur de proximité parmi l'au moins un capteur disposé sur le côté de l'interface de chargement du terminal d'utilisateur, et détecter, au moyen du capteur de proximité, la distance entre l'interface de chargement et la prise de chargeur ; et
parallèlement, le module de commande de lumière est spécifiquement configuré pour :
quand la distance entre l'interface de chargement et la prise de chargeur est dans la plage de paramètres prédéfinie et une sortie du capteur de proximité est une valeur de niveau d'activation prédéfinie, activer le dispositif d'éclairage disposé sur l'autre côté de l'interface de chargement.

11. Appareil de commande de lumière pour un terminal d'utilisateur selon la revendication 8, dans lequel, quand le paramètre environnemental est la intensité de lumière sur le côté de l'interface de chargement du terminal d'utilisateur, le module de détection est spécifiquement configuré pour :
activer un capteur de lumière parmi l'au moins un capteur disposé sur le côté de l'interface de chargement du terminal d'utilisateur, et détecter, au moyen du capteur de lumière, la intensité de lumière sur le côté de l'interface de chargement ; et
parallèlement, le module de commande de lumière est spécifiquement configuré pour :
quand la intensité de lumière sur le côté de l'interface de chargement est dans la plage de paramètres prédéfinie et une sortie du capteur de lumière est une valeur de niveau d'activation prédéfinie, activer le dispositif d'éclairage disposé sur l'autre côté de l'interface de chargement.

12. Appareil de commande de lumière pour un terminal d'utilisateur selon la revendication 8, dans lequel, quand le paramètre environnemental est une valeur de combinaison d'au moins deux paramètres parmi : la puissance de champ magnétique sur le côté de l'interface de chargement du terminal d'utilisateur, la distance entre l'interface de chargement du terminal d'utilisateur et la prise de chargeur, et la intensité de lumière sur le côté de l'interface de chargement du terminal d'utilisateur, le module de détection est spécifiquement configuré pour :
activer au moins deux capteurs parmi : un capteur Hall, un capteur de proximité et un capteur de lumière parmi l'au moins un capteur disposé sur le côté de l'interface de chargement du terminal d'utilisateur, et détecter, au moyen des au moins deux capteurs, au moins deux paramètres parmi : la puissance de champ magnétique sur le côté de l'interface de chargement du terminal d'utilisateur, la distance entre l'interface de chargement et la prise de chargeur, et la intensité de lumière sur le côté de l'interface de chargement ; et
parallèlement, le module de commande de lumière est spécifiquement configuré pour :
quand au moins deux paramètres parmi : la puissance de champ magnétique sur le côté de l'interface de chargement du terminal d'utilisateur, la distance entre l'interface de chargement et la prise de chargeur, et la intensité de lumière sur le côté de l'interface de chargement se situent dans la plage de paramètres prédéfinie, activer, selon des valeurs de niveau d'activation prédéfinies émises par le capteur Hall, le capteur de proximité et le capteur de lumière, le dispositif d'éclairage disposé sur l'autre côté de l'interface de chargement.

13. Appareil de commande de lumière pour un terminal d'utilisateur selon l'une quelconque des revendications 8 à 12, dans lequel, après l'activation du dispositif d'éclairage disposé sur l'autre côté de l'interface de chargement, le module de commande de lumière est en outre configuré pour commander au moins un paramètre parmi : une couleur d'affichage, une luminosité et une fréquence de clignotement du dispositif d'éclairage selon le niveau de batterie du terminal d'utilisateur et/ou une information de service d'utilisateur.

14. Appareil de commande de lumière pour un terminal d'utilisateur selon l'une quelconque des revendications 8 à 13, dans lequel, après l'activation du dispositif d'éclairage disposé sur l'autre côté de l'interface de chargement, le module de commande de lumière est en outre configuré pour :
commander, selon au moins un paramètre parmi : un état de chargement du terminal d'utilisateur, le niveau de batterie du terminal d'utilisateur et le paramètre environnemental sur le côté de l'interface de chargement du terminal d'utilisateur, la désactivation du dispositif d'éclairage, ce qui consiste spécifiquement à :
si une durée pendant laquelle le terminal d'utilisateur est dans un état déchargé dépasse un deuxième seuil prédéfini, désactiver le dispositif d'éclairage ; ou
si le niveau de batterie du terminal d'utilisateur atteint un troisième seuil prédéfini, désactiver le dispositif d'éclairage ; ou
si le terminal d'utilisateur est dans un état déchargé et le paramètre environnemental se situe hors de la plage de paramètres prédéfinie, désactiver le dispositif d'éclairage.

15. Terminal d'utilisateur (61), comprenant : un processeur (601) et une mémoire (602) ; et comprenant en outre : un appareil de commande de lumière selon l'une quelconque des revendications 8 à 14.
